# EUROPEAN PATENT SPECIFICATION

(11) **EP 1 053 501 B1**
(45) Date of publication and mention of the grant of the patent: **23.07.2003**
(21) Application number: 99902718.8
(22) Date of filing: 02.02.1999
(51) Int. Cl.: G02F 1/136, H01L 27/02

(54) **LIGHT MODULATOR ON A SEMICONDUCTOR SUBSTRATE**
LICHTMODULATOR AUF EINEM SUBSTRAT AUS HALBLEITERMATERIAL
MODULATEUR DE LUMIERE SUR UN SUBSTRAT SEMI-CONDUCTEUR

(30) Priority: 02.02.1998 GB 9802219
(43) Date of publication of application: 22.11.2000
(73) Proprietor: Thomas Swan & Co. Ltd., London, W14 ORZ (GB)
(72) Inventor: WILKINSON, Timothy David, Trumpingtton, Cambridge CB2 2HZ (GB); CROSSLAND, William Alden, Harlow, Essex CM20 2QD (GB); TAN, Kim, Leong, Cambridge CB2 1ND (GB); PRATT, Edward, Martin, Cambridge CB2 1RF (GB); MEARS, Robert, Cambridge CB4 2AE (GB)
(74) Representative: Neobard, William John
(86) International application number: GB9900348
(87) International publication number: WO99039240

(56) References cited:
- EP-A- 0 405 815
- EP-A- 0 811 872
- US-A- 5 182 665
- JOHNSON K M ET AL: "Smart spatial light modulators using liquid crystals on silicon" IEEE JOURNAL OF QUANTUM ELECTRONICS, FEB. 1993, USA, vol. 29, no. 2, pages 699-714, XP000349817 ISSN 0018-9197
- HANDSCHY M A ET AL: "Ferroelectric Liquid-Crystal Devices For High-Resolution Imaging" SID INTERNATIONAL SYMPOSIUM DIGEST OF TECHNICAL PAPERS, ANAHEIM, MAY 6 - 10, 1991, vol. 22, 6 May 1991, pages 246-249, XP000503038
- RADCLIFFE S ET AL: "Miniature silicon backplane ferroelectric liquid crystal displays for head mounted display applications" INTERNATIONAL FERROELECTRIC LIQUID CRYSTAL CONFERENCE (FLC 95), CAMBRIDGE, UK, 23-27 JULY 1995, vol. 179, no. 1-4, pages 115-119, XP002103650 ISSN 0015-0193, Ferroelectrics, 1996, Gordon & Breach, Switzerland

## Description

This invention relates to a device that can modulate the phase of light and that can be integrated with silicon VLSI (Very Large Scale Integrated) circuits for the transmission of digital information from them. Such integration is important because it enables 'smart pixels' to be fabricated in silicon; a smart pixel is an area on silicon with electronic functionality that can communicate with other such areas optically as well as electrically. Optical communication can be superior to electrical communication over large distances, so many types of large electronic systems will use electronic modules globally connected via optics.

Light modulators can be based on a silicon substrate. They often use aluminium layers as electrodes for the liquid crystal overlaid on them, these layers also functioning as mirrors [Collings et al., Applied Optics 28, pp. 4740-4747, 1989]. The modulators may be designed to modulate the intensity or phase of light. These devices are used in reflective mode and rely on a uniform aluminium mirror for successful operation. After fabrication, the silicon often needs to undergo a planarisation process to improve the device operation [O'Hara et al., "Post-processing using microfabrication techniques to improve the optical performance of liquid crystal over silicon backplane spatial light modulators", Proceedings of the SPIE, Vol. 2641, pp. 129-139, 1995]. Planarisation might be required for two reasons:
(1.) Some applications, e.g. holographic switching and filtering, require arrays of pixels with only small gaps between them (i.e. having what is commonly known as a high fill factor). The circuitry present at each pixel, even if it is only one drive transistor, takes up space and leads to large gaps, since all circuit structures present a topography, i.e. protrude above the flat silicon surface; and
(2.) The optical quality of aluminium metal mirrors that use the metal layers that are part of the standard CMOS VLSI circuit fabrication process is poor (owing to the processing conditions and choice of material).

Both these problems are solved in the latter article by depositing and patterning a new metal mirror layer on a planarised dielectric layer placed over the whole pixel area. An electrical connection must be made at each pixel between the electrode proper and the new mirror. Such planarisation is therefore desirable, but it is difficult and expensive.

An alternative approach is to use an SLM operating in transmissive mode. The Collings article mentions this as a possibility when using TFT arrays; reference may also be made to US-A-5182665 in the names O'Callaghan and Handschy (Displaytech, Inc.). This patent shows switchable diffraction gratings for diffracting unpolarized light; the gratings are made of FLC (ferro-electric liquid-crystal) cells addressed in stripes to which alternately opposite voltages can be applied. The plates containing the liquid-crystal material can be made of glass for visible-light applications, or silicon or other materials for IR applications. In telecommunications wavelengths of 1310 and 1550 nm are commonly used.

There are two main reasons for using FLCs for modulation for telecomms, rather than the nematic liquid crystals more common in displays. One concerns speed: nematics switch much slower than ferroelectrics; the other is that nematics suffer from noise due to phase quantisation. However, ferroelectrics in their turn have disadvantages in that they are more difficult to address, partly because they rotate the birefringence axes in the plane rather than switch between bi-refringent and uniaxial, and partly because this rotation is too small for many purposes - a maximum of 45° is all that can be achieved in practice. Moreover most ferroelectric liquid crystals (FLCs) are bi-stable: no gradation of the rotation of the rotation can be brought about.

The last disadvantage of FLCs can be reduced or eliminated by using distorted-helix FLCs. However, these likewise rotate the axes by not more than 45°.

Theoretically one can use two FLC devices in series, with a π/4 (half-wave) plate between them; however, using two SLMs is not a practical proposition. To achieve the same result US 5182665 in one embodiment (Fig. 12) makes use of an ingenious scheme using only one SLM where the incident light passes through the ferroelectric SLM, is reflected by a mirror, which can be constituted by one of the electrodes of the SLM, and passes back through the ferroelectric material. This gives the required 90° rotation.

The disadvantage of the transmissive modes as a class is that they have hitherto not allowed the use of active backplanes, that is to say, control circuitry associated with each pixel. US 5182665, for instance, describes only a pair of electrodes switching the entire grating on or off. Active-backplane arrangements, as explained in Collings et al., can be very fast and compact and are successfully used with reflective SLMs, but the standard CMOS or NMOS processes cannot be combined with transmissive SLMs because of the metallisation used for the transistors. It is an aim of the present invention to take advantage of active-backplane technology without abandoning the double-pass SLM configuration.

According to the present invention there is provided a light-modulating device according to the subject-matter of claim 1.

In particular the electrodes on the side of the light-modulating layer adjacent to the subtrate may be constituted by diffused regions in the semiconductor substrate, or by polycrystalline layers formed on the substrate, which for silicon are transparent to infrared wavelengths above 1200 nm. Such materials fit in easily with the conventional silicon processes, and indeed the invention also relates to methods for making such structures in which the electrodes are made at the same time as a component of the drive circuitry. However, in principle materials such as ITO can be used.

Preferably the double-pass configuration is used in which a mirror is provided on the side of the modulating layer opposite the semiconductor substrate, usually with a quarter-wave plate on the mirror.

The modulating layer can be a ferroelectric liquid crystal or some other light-modulating material and the semiconductor is most conveniently silicon. Light in the common telecommunications wavelength region (1.3µm to 1.55µm) will pass through the light-modulating material and silicon substrate, so that the device can operate in a transmissive mode.

In operation some property of the light, e.g. phase, is altered as it passes through the modulator. To this end the electrode can be used to alter the potential applied to the material of the light-modulating layer, thus controlling the modulation of the property of the light. Circuitry that performs operations, such as applying a drive voltage to the substrate electrode, and the control of the modulator, is then integrated on the silicon substrate, beside the modulator. Such devices are commonly known as smart pixels.

The use of substrate diffusions, or alternatively polycrystalline semiconductor leads, to apply a voltage to the liquid-crystal layer through which light is transmitted rather than reflected totally solves problem (2) indicated above, because no flat surface is needed for reflection. However, a diffused-electrode arrangement might be useful even for reflective devices since the surface of the silicon wafer is extremely flat and for suitable wavelengths can be used as a reflector.

The invention can be applied to linear (one-dimensional) arrays of pixels, where circuitry can be placed outside the pixel area. Here problem 1 indicated above does not exist, enabling high quality linear devices to be made. In many applications that use structured illumination (light beams aimed at specific modulators) problem 1 indicated above also does not exist. In both these cases there are major advantages in operating liquid-crystal (or other integrated) modulators in this manner.

A further advantage of the invention occurs when an array of reflective pixels is required, but it is also needed to place an optical component (such as a fixed wave plate) directly next to the mirror. Since such a waveplate will normally be insulating in a conventional silicon-backplane spatial light modulator, optically transparent conducting pixels must be defined on the top surface of the waveplate and connected by vias to the underlying circuitry. This is difficult and expensive, but using the invention it can be avoided, e.g. by placing a waveplate on the front glass of the liquid-crystal cell and depositing a high-quality continuous mirror on its outside surface, with the diffused-electrode side of the modulator facing the incoming light.

The liquid crystal can be a single two-state or two-level (i.e. "black" and "white") modulator. However, two-level phase modulators used to display a phase hologram have two main disadvantages. Firstly, they operate with an inherent inverse symmetry that is a problem in holographically routed crossbar systems, as only half of the replay plane may be used for switching purposes and the other half is wasted. Secondly, there is a loss introduced by such holograms, as the maximum efficiency of a two-level phase system is only 41%.

By using three or more levels of modulation, i.e. a grey scale, the inverse symmetry can be removed from the replay plane, allowing the whole replay plane to be used for switching purposes. Also, the loss introduced into a system using e.g. four-level holograms is less than in two-level systems, the maximum efficiency of such a hologram being 81%. The disadvantages of a two-level system are thus removed by using three or more levels of modulation.

To get four levels of phase modulation requires phase shifts of up to 270° being introduced by the modulator. Using a material such as a ferroelectric liquid crystal (FLC) in a modulator requires a material with a tilt angle of at least 67.5°; such materials (e.g. FLC 10817) exist, but their electro-optic effects are difficult to incorporate in a device. Hence standard FLCs, with their lower tilt angle doubled by the double-pass configuration, offer a good working compromise. Distorted-helix FLCs are particularly suitable.

For a better understanding of the invention embodiments of it will now be described, by way of example, with reference to the accompanying drawings, in which:
* Figure 1 shows a very schematic plan view of a silicon substrate 1 with a substrate diffusion 2;
* Figure 2 shows a side view of an embodiment of the invention incorporating the substrate described in Figure 1;
* Figure 3 shows a silicon design layout using a two-micron process;
* Figure 4 shows a section through a reflective modulating element representing a second embodiment of the invention, which could be used to provide increased modulation levels as described above; and
* Figures 5A, B and C show variations of the basic scheme of Figure 4.

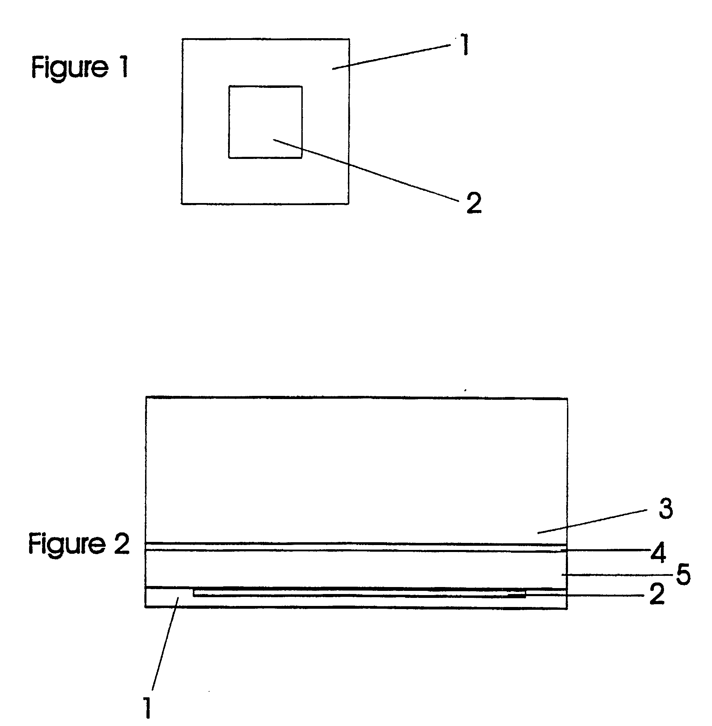

In Figs. 1 and 2 a silicon substrate 1 contains a substrate diffusion 2 that acts as an electrode. A liquid-crystal layer 5 is contained between the surface of a glass plate 3 and the silicon substrate 1. The glass plate 3 has an ITO electrode on its surface facing the liquid crystal, and potential difference is applied to the liquid crystal 5 by way of the transparent electrode 4 and the substrate diffusion 2 in order to modulate the state of the liquid crystal. The transparent electrode can be a common electrode.

Light enters through the glass 3 and passes through the transparent electrode 4, and through the liquid crystal 5. After passing through the liquid crystal, the light passes through the substrate diffusion 2 and the silicon substrate 1 and leaves the device. The phase of the light entering the device at 3 and exiting the device at 1 is altered by the liquid-crystal layer 5 when the latter is addressed by the application of a suitable voltage between the transparent electrode 4 and the diffusion 2. The complete unit thus acts as an optically transmissive phase modulator.

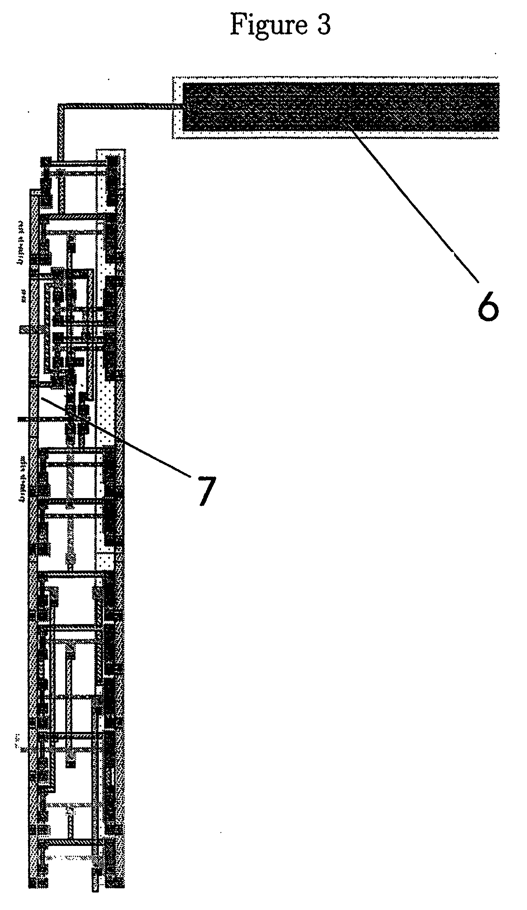

In an SLM many pixels of this nature will be formed in a one-dimensional or two-dimensional array, each addressed by a drive circuit. In a two-dimensional array the drive circuits could alternate in rows with the pixels, or they could all be together in a separate area. TFTs could be used as pixel drivers. In devices using the invention this drive circuit is formed in the substrate 1, in a second part of the substrate to the side of the first. The technology for designing and fabricating a CMOS VLSI circuit is well established. Figure 3 is an example layout that could be used as the basis for a one-dimensional light-modulating device, when used in a cell such as described, for example, in Figure 2.

The end part of a substrate diffusion 6, of which only the left-hand end is visible in Fig. 3, is connected to some control and drive circuitry 7 in the same silicon substrate. The voltage applied to the diffusion 6 is controlled by the control and drive circuitry 7. In practice there might be several hundred diffusions 6, each having corresponding circuits 7, of which Fig. 3 shows only one, arranged adjacently to form a row of pixels constituting a first, transparent, area of the substrate. (The right-angle bend in the connecting line between the diffusion 6 and the circuit 7 would not be present in practice and is purely for ease of representation). The substrate diffusion 6 might have dimensions 20µm x 6mm, while the associated circuit 7 might be 20µm x 100µm, arranged in line with its diffusion 6. The circuits 7, with their opaque interconnects, collectively form a second area, generally considerably smaller than the first. Light is directed at the pixels of the first area.

Transmissive optical modulators that can provide several distinct levels, giving analogue modulation of light, are important as they can be used in many optical systems e.g. optical correlators, displays and optical interconnects.

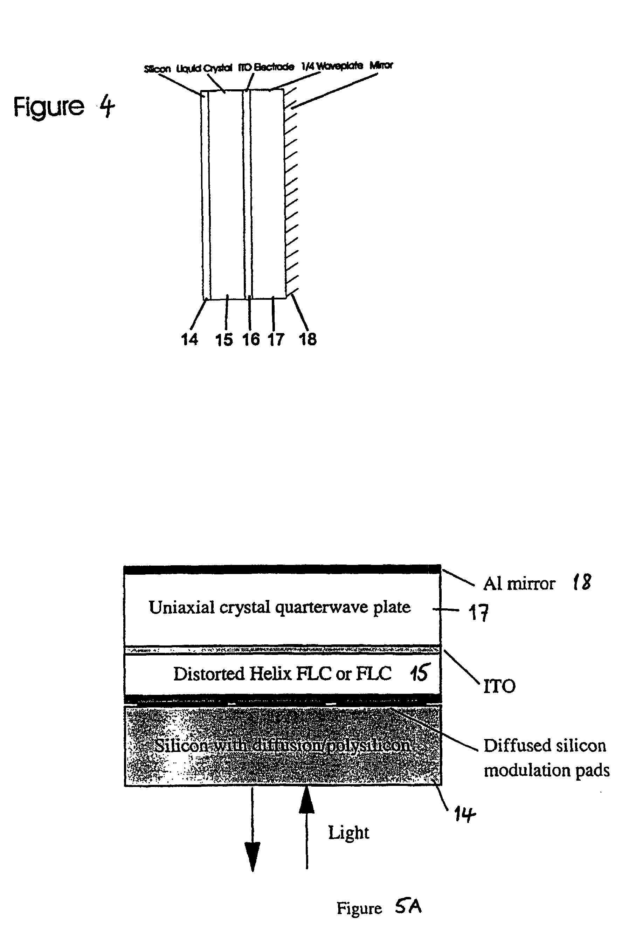

A second embodiment of the invention, using a so-called double-pass configuration, will now be described by way of further example with reference to Fig. 4.

A silicon substrate 14 with substrate diffusions (not shown) and control circuits (likewise) is attached to a cell containing a material, here a liquid crystal 15, whose optical properties, for instance its reflective, absorptive or transmissive properties, change with applied voltage as before. A transparent electrode 16 is attached to the cell containing the material 15 and to a glass or plastic quarter-wavelength waveplate 17. In this embodiment the plate 17 acts simultaneously as the rear plate for the LC cell and as a quarter-wave plate, but two separate components could be used. The waveplate 17 is placed against a mirror 18. Infra-red light enters through the silicon substrate and diffusion 14 and continues through the modulating material 15 and transparent electrode 16. Following this the light travels through the waveplate 17 and is reflected from the mirror 18. The light takes a reverse path from 17 through to 14 and leaves the cell. As a result of this second passage through the modulating material 15 the modulation of the light is doubled, increasing the overall magnitude of the electro-optic effect. An applied potential difference between the electrodes 14 and 16 modulates the optical property of the material 15. The complete cell, encompassing the parts 14 to 18, may thus act as a light modulator.

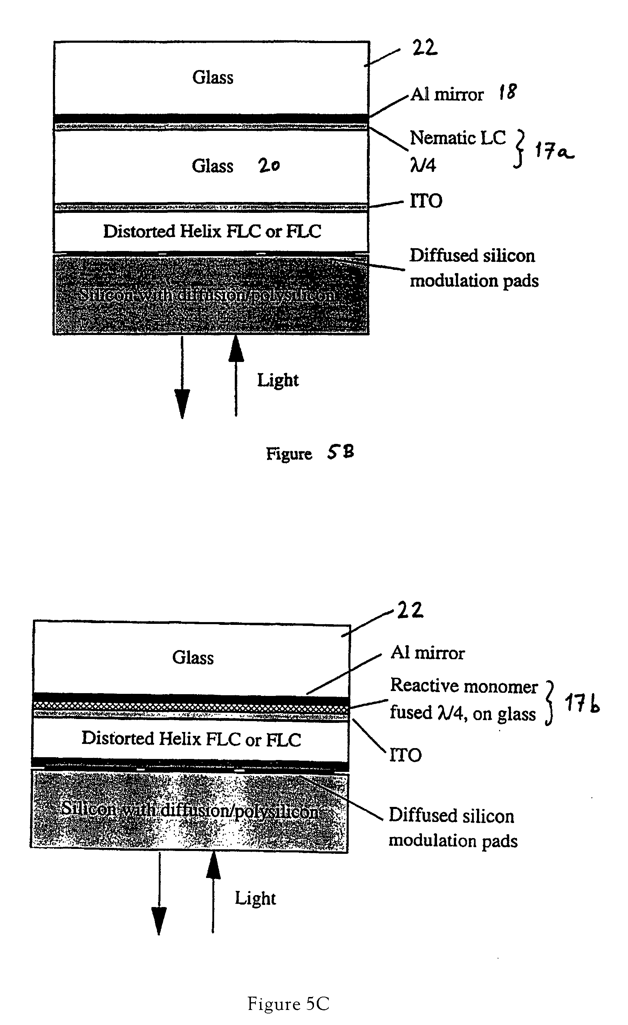

Figs. 5A, 5B and 5C show various ways of incorporating the quarter-wave plate between the LC layer and the mirror. In Fig. 5A a transparent plate is used, constituting one of the plates of the liquid-crystal cell. It can be of glass, or of quartz or mica. However, this plate has to be 2-3 mm thick to give the quarter wave retardation for IR wavelengths, which gives rise to undesirable diffraction effects. In Fig. 5B therefore a thin (100µm) glass plate 20 is used, the λ/4 plate being formed by a nematic liquid-crystal layer 17a. In Fig. 5C a fused reactive monomer layer 17b on glass is used. Mechanical support is afforded by a rear glass plate 22. In all these embodiments the drive circuits in the silicon are not shown.

The embodiments described above are particularly suitable for use as light modulators for use in the switching of telecommunications signals. However, the invention can be applied to any device where an optical signal or information is to be modulated by the application of an electric signal.

## Claims

1. A light-modulating device comprising a semiconductor substrate (1), a layer of light - modulating material (5) on a first part of the substrate, electrodes (2) for for applying a voltage to the light - modulating layer, the electrodes being made of a material transparent to the wavelength of the light used, and drive circuitry (7) for addressing the light-modulating layer via the said electrodes; wherein the drive circuitry (7) for addressing the light-modulating layer via the said electrodes is integrated on the semiconductor substrate to the side of the light-modulating region of the modulator and wherein the electrodes are integrated in the semiconductor substrate.

2. A light-modulating device according to claim 1, in which the electrodes (2) are diffused regions in the semiconductor substrate.

3. A light-modulating device according to claim 1, in which the electrodes are polycrystalline layers formed on the substrate.

4. A light-modulating device according to any preceding claim, in which a mirror (18) is provided on the side of the modulating layer opposite the semiconductor substrate in order to reflect the light back through the modulator.

5. A light-modulating device according to claim 4, and further including a quarter-wave plate between the mirror and the modulator.

6. A light-modulating device according to any preceding claim, in which the addressing electrodes form a one-dimensional array.

7. A light-modulating device according to claim 6, in which the individual drive circuits are arranged in a row parallel to the array of addressing electrodes.

8. A light-modulating device according to any of claims 1 to 5, in which the addressing electrodes form a two-dimensional array.

9. A light-modulating device according to any preceding claim, in which the modulator is a liquid crystal device contained between the semiconductor substrate (1) on the one side and a transparent plate (3) on the other.

10. A light-modulating device according to any preceding claim, arranged to be used at infrared wavelengths above 1200 nm.

## Patentansprüche

1. Lichtmodulator, der ein Halbleitersubstrat (1), eine Schicht aus Licht modulierendem Material (5) auf einem ersten Teil des Substrats, Elektroden (2) für das Anlegen einer Spannung auf die Licht modulierende Schicht, wobei die Elektroden aus einem Material hergestellt sind, das gegenüber der Wellenlänge des verwendeten Lichts transparent ist, und eine Treiberschaltung (7) zum Ansteuern der Licht modulierenden Schicht über die Elektroden aufweist, wobei die Treiberschaltung (7) zum Ansteuern der Licht modulierenden Schicht über die Elektroden auf dem Halbleitersubstrat zur Seite der Licht modulierenden Region des Modulators hin eingebaut ist und wobei die Elektroden in dem Halbleitersubstrat eingebaut sind.

2. Lichtmodulator nach Anspruch 1, wobei die Elektroden (2) diffundierte Regionen in dem Halbleitersubstrat sind.

3. Lichtmodulator nach Anspruch 1, wobei es sich bei den Elektroden um polykristalline Schichten handelt, die auf dem Substrat ausgebildet sind.

4. Lichtmodulator nach einem der vorhergehenden Ansprüche, wobei ein Spiegel (18) auf der Seite der modulierenden Schicht gegenüber dem Halbleitersubstrat angeordnet ist, um das Licht zurück durch den Modulator zu reflektieren.

5. Lichtmodulator nach Anspruch 4, der darüber hinaus ein Viertelwellenplatine zwischen dem Spiegel und dem Modulator aufweist.

6. Lichtmodulator nach einem der vorhergehenden Ansprüche, wobei die ansteuernden Elektroden eine eindimensionale Anordnung bilden.

7. Lichtmodulator nach Anspruch 6, wobei die einzelnen Treiberschaltungen, in einer Reihe angeordnet sind, die parallel zur Anordnung der ansteuernden Elektroden verläuft.

8. Lichtmodulator nach einem der Ansprüche 1 bis 5, wobei die ansteuernden Elektroden eine zweidimensionale Anordnung bilden.

9. Lichtmodulator nach einem der vorhergehenden Ansprüche, wobei der Modulator ein Flüssigkristallbauteil ist, der zwischen dem Halbleitersubstrat (1) auf der einen Seite und einer transparenten Platte (3) auf der anderen Seite enthalten ist.

10. Lichtmodulator nach einem der vorhergehenden Ansprüche, der eingerichtet ist, um mit Infrarotwellenlängen über 1200 nm verwendet zu werden.

## Revendications

1. Modulateur de lumière comprenant un substrat semi-conducteur (1), une couche de matériau modulateur de lumière (5) sur une première partie du substrat, des électrodes (2) pour appliquer une tension à la couche modulatrice de lumière, les électrodes étant constituées d'un matériau transparent à la longueur d'onde de la lumière utilisée, et des circuits de commande (7) pour adresser la couche modulatrice de lumière via lesdites électrodes; dans lequel les circuits de commande (7) permettant d'adresser la couche modulatrice de lumière via lesdites électrodes sont intégrés au substrat semi-conducteur sur le côté de la région modulatrice de lumière du modulateur et dans lequel les électrodes sont intégrées au substrat semi-conducteur.

2. Modulateur de lumière selon la revendication 1, dans lequel les électrodes (2) sont des régions diffusées dans le substrat semi-conducteur.

3. Modulateur de lumière selon la revendication 1, dans lequel les électrodes sont des couches polycristallines formées sur le substrat.

4. Modulateur de lumière selon l'une quelconque des revendications précédentes, dans lequel un miroir (18) est agencé sur le côté de la couche modulatrice opposé au substrat semi-conducteur de manière à réfléchir la lumière à travers le modulateur.

5. Modulateur de lumière selon la revendication 4, comprenant en outre une lame quart d'onde entre le miroir et le modulateur.

6. Modulateur de lumière selon l'une quelconque des revendications précédentes, dans lequel les électrodes d'adressage forment un réseau unidimensionnel.

7. Modulateur de lumière selon la revendication 6, dans lequel les circuits de commande individuels sont agencés en rangée parallèle au réseau d'électrodes d'adressage.

8. Modulateur de lumière selon l'une quelconque des revendications 1 à 5, dans lequel les électrodes d'adressage forment un réseau bidimensionnel.

9. Modulateur de lumière selon l'une quelconque des revendications précédentes, dans lequel le modulateur est un dispositif à cristal liquide confiné entre le substrat semi-conducteur (1) sur une face et une plaque transparente (3) sur l'autre face.

10. Modulateur de lumière selon l'une quelconque des revendications précédentes, agencé pour être utilisé à des longueurs d'onde infrarouges supérieures à 1200 nm.
